# EUROPEAN PATENT SPECIFICATION

(11) **EP 1 544 503 B1**
(45) Date of publication and mention of the grant of the patent: **03.09.2008**
(21) Application number: 04257938.3
(22) Date of filing: 17.12.2004
(51) Int. Cl.: F16G 13/02, F16G 13/06

(54) **A chain**
Kette
Chaîne

(30) Priority: 19.12.2003 GB 0329414
(43) Date of publication of application: 22.06.2005
(73) Proprietor: RENOLD Plc, Wythenshawe Manchester M22 5WL (GB)
(72) Inventor: Christmas, Michael Charles, Cheadle Hulme, Cheshire SK8 6DE (GB)
(74) Representative: Every, David Aidan

(56) References cited:
- FR-A- 536 273
- FR-A- 968 423
- US-A- 1 366 126
- US-A- 1 524 981

## Description

The present invention relates to a chain of the kind used for power transmission purposes including transportation in a conveyor.

A conventional chain used for transmission or transportation purposes has overlapping chain link members or plates that are interconnected by pins that pass through aligned holes in adjacent link members. In roller bush chains opposed inner link plates are connected with opposed pairs of outer link plates by pins about which the inner link plates articulate but to which the outer link plates are fixed by, for example, an interference fit. The opposed inner link plates are joined by a transverse bush that is received in apertures in the plates and through which the connecting pin passes. A roller is rotatably disposed on the bush.

A conventional chain of the kind described above is generally driven by a sprocket and suffers from noise that occurs during meshing of the chain with sprocket teeth. The collision between a chain and sprocket happens rapidly during messing as a result of what is know as "polygonal effect" or "chordal effect"- These terms describe the uncontrolled and rapid movement of the chain links relative to the sprocket teeth during meshing and unmeshing. The movement arises from the fact that pitch line of the chain comprises a plurality of straight lines or chords that combine to form part of a polygon rather than a circle (as would be the case for a flexible belt). The rapid and uncontrolled movement of the chain links results in them impacting on the sprocket with a high velocity thereby generating significant noise.

Another problem with conventional transmission chains is their tendency to wear as a result of rubbing contact between components of the chain. In particular there is significant wear at the bearing contact surfaces between the chain links and the pins. Wear in chains leads to chain elongation, inefficient power transmission or unmeshing of the chain from the sprockets. Attempts to reduce the tendency to wear include making the bearing contact surfaces smooth and hard and regular lubrication both of which add significant cost to the manufacture and/or running of a chain.

US1,366,126 describes a single bar heavy duty chain (i.e. without opposed inner and outer link members). Each link comprises a rectangular bar with head at each end. Each of these heads extends laterally beyond the side face of the link bar and is curved to form a concavity. Adjacent links along the chain length are held together at their ends by annular discs that connect to the heads. A transverse bolt interconnects the discs and passes adjacent the concavity that forms a bearing surface therewith.
It is an object of the present invention to obviate or mitigate the aforesaid disadvantages.

According to the present invention there is provided a power transmission chain having a longitudinal axis and comprising opposed first link members arranged alternately with opposed second link members along the length of the chain, the first link members interconnecting adjacent second link members in an articulated manner, a clearance defined between adjacent second link members, and a pin disposed in said clearance and extending in a direction transverse to the chain axis, each first link member being fixed to the pin so that it does not rotate relative thereto, each second link member being free to articulate relative to the pin, the first link member defining a first bearing surface extending in a direction transverse to the direction of the longitudinal axis of the chain and each second link member defining a second bearing surface extending in a direction transverse to that of the longitudinal axis of the chain, at least one of the first or second bearing surfaces being arcuate and the first and second bearing surfaces being in engagement with one another to provide an articulating joint in which there is rolling contact between the bearing surfaces during articulation of the links.

The rolling contact between the first and second link members provides a significant reduction in the wear of the chain as it eliminates the rubbing contact between the pin and the link plates.

Each second link member is disposed between adjacent pins.

There are preferably two such first and second bearing surfaces in rolling contact between adjacent pins. The arrangement provides for a chain that has relatively few components and which has two articulating points per chain link pitch. This reduces the polygonal effect and thus the attendant noise.

The first link member may be fixed to said pin by means of a friction fit. Ideally the first link member has an aperture and the periphery of that part of the link member that defines the aperture is a friction fit with the external surface of the pin.

There may be a roller rotatably disposed on the pin.

Each first link member may have two or more parts.

Each first link member comprises a plate having a main portion that extends in a direction along the length of the chain and walls that extend in a direction transverse to chain axis. Each of the walls preferably defines said first bearing surface. Each first link member ideally has two such walls providing a first bearing surface for the second link members on each side of the first link member along the length of the chain.

Each second link member preferably has a central opening. The second bearing surface may be defined by part of the member that defines the opening. In one preferred embodiment the second bearing surface is arcuate and the first bearing surface is planar. However, in an alternative preferred design the second bearing surface is planar and the first bearing surface is arcuate. In a further alternative preferred design both surfaces are arcuate. The arcuate surface (or surfaces) may be symmetrical or asymmetrical.

The first link member may extend on the outside of part of the second link member. In such a design the walls extend inwardly toward the axis of the chain. In an alternative preferred embodiment the main portion of the first link member is disposed in-board of the second link member and the walls extend outwardly of the axis. The walls may have retaining portions that prevent separation of the first and second link members. The retaining portions preferably extend in a plane that is substantially parallel to the plane occupied by the main portion of the first link member.

The first link member may comprise two portions. Preferably a first portion is disposed in-board of the second link members and a second portion extends over the outside of the second link members. One or both portions may have the walls that that define the first bearing surface.

Preferably there is a clearance between the ends of the walls and the inner link members so as to allow for articulation of the second link members.

The ends of second link members ideally have a recess for receipt of the pin. The recess may be of a shape that defines part of a circle.

The chain may be a leaf chain with interleaved strands of first and second link members.

In one possible embodiment opposed second link members are connected to one another. Opposed second link members may be connected by pant-cylindrical sections. There is preferably such a section at each end of the second link members.

Specific embodiments of the present invention will now be described, by way of example only, with reference to the accompanying drawings in which:
Figure 1 is a perspective view of a first embodiment of part of a roller chain in accordance with the present invention, shown with one outer link member separated from the chain;
Figure 2 is a perspective view of a second embodiment of part of a roller chain in accordance with the present invention, shown with one outer link member separated from the chain;
Figure 3 is a perspective view of a third embodiment of part of a roller chain in accordance with the present invention, shown with part of one outer link member separated from the chain;
Figure 4 is a perspective view of a fourth embodiment of part of a roller chain in accordance with the present invention, shown with one link removed from the chain;
Figure 5 is a perspective view of one end of a fifth embodiment of a chain in accordance with the present invention;
Figure 6 is a perspective view of a part of a leaf chain in accordance with the present invention, shown with two outer links members removed from the chain; and
Figure 7 is a schematic representation showing articulating link members of the chain of the present invention.

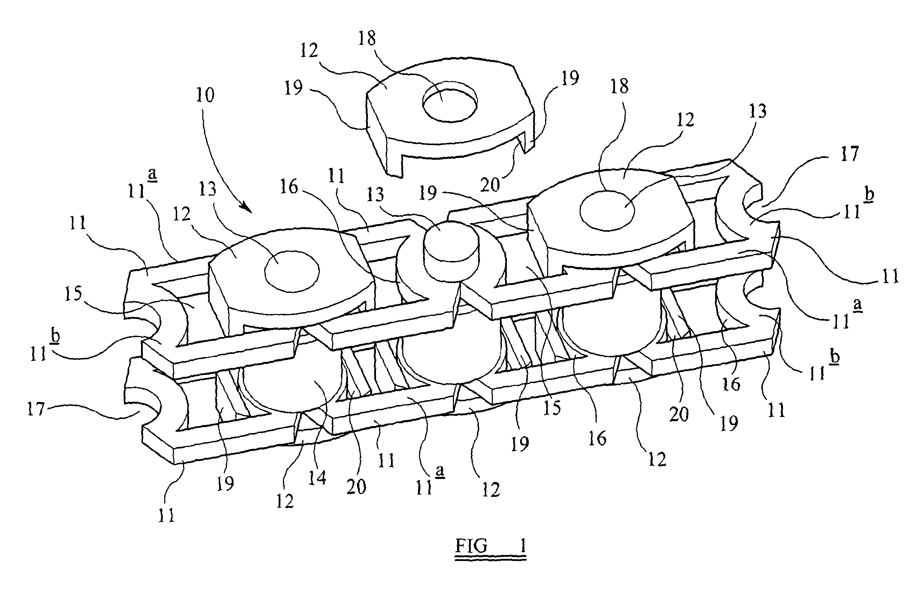

Referring now to figure 1 of the drawings, the exemplary roller chain 10 comprises two sides of inner and outer link plates 11, 12 arranged alternately along the length of the chain, the sides being separated and interconnected by transversely extending pins 13.

A cylindrical roller 14 is rotatably and concentrically mounted on each of the pins 13 and extends transversely between the two sides of the chain.

Adjacent inner link plates 11 on each side of the chain are interconnected by an outer link plate 12 in a manner that allows articulation between them and the inner link plates 11. Each inner link plate 11 is in the form of a frame-like member with two spaced, parallel, straight limbs 11a extending in parallel to the longitudinal axis of the chain and connected at each end by arcuate limbs 11b so as define a central opening 15. The inner periphery of each of the arcuate limbs 11b (facing the opening) defines a bearing surface 16 for engagement with an outer link plate 12. The outer periphery of each limb 11b has a circular sector cut-out 17 that provides space for the pin 13. It is important that there is sufficient clearance between the outer periphery and the pin 13 so that the inner link 11 is free to articulate in the intended manner.

The outer link plate 12 overlaps the ends of adjacent inner link plates 11 and has a central aperture 18 that receives the pin in a friction-fit or interference-fit engagement, although other forms of connection are possible. A wall 19, defined at each end of the outer link plate 12, projects into the central opening 15 in the inner link plates 11 immediately adjacent to the arcuate limbs 11b so as to prevent separation of the inner link plates 11 in the direction of the chain. The length of each wall 19 extends in a direction substantially perpendicular to the straight limbs 11 a of the inner link plates and defines an inwardly facing planar bearing surface 20 that faces and bears against the bearing surface 16 of the adjacent inner link plate 11. The walls 19 of each outer link 12 thus serve to carry the load applied to the chain 10.

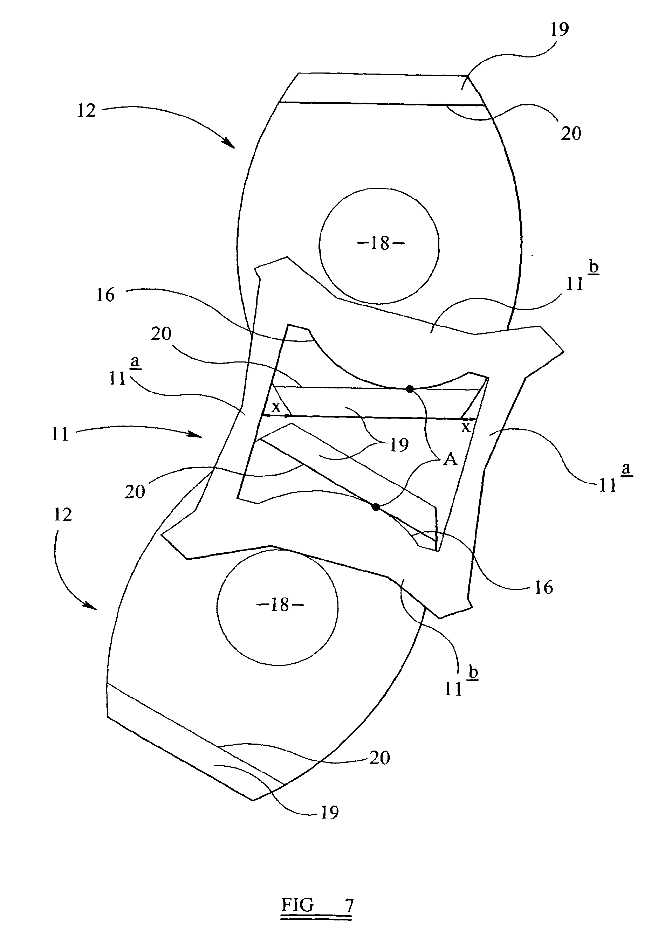

It will be understood from the described design that the inner link plates 11 are disposed freely between each adjacent pair of pins 13 but are held in position along the length of the chain by the outer link plate 12. In use, the chain meshes with a toothed sprocket in the conventional way. When articulation occurs the bearing surfaces 20, 16 of the outer and inner link plates 12, 11 roll over one another as illustrated in figure 7 (in which the components are shown schematically and do not correspond exactly in shape to those shown in figure 1). At any point in time there is only a small contact area, A, between the link plates. As the plates articulate the contact area, A, moves along the link plates. This action results in considerably reduced friction in comparison to the bearing between the pin and plate/bush in a conventional bush roller chain and therefore affords the possibility of lubrication-free running. The degree of articulation is dependent on factors such as the curvature of the arcuate bearing surface 16 on the inner link plate 11 and the amount of clearance between the wall and the inner link plate (which is dictated by the length of the wall 19), the distance being represented by x in figure 7. Since the arrangement provides two articulating joints per pitch (the distance between adjacent pins) compared to one joint for a conventional chain, the polygonal effect and therefore noise is reduced.

In view of the central opening 15 of the inner link plate 11, the chain 10 has a lower mass in comparison to a conventional chain. It therefore has the potential for running at higher speeds than currently possible.

A polymer washer or liner (not shown in the figures) may be disposed in a clearance between the end of the roller 14 and the inner link plate 11 to provide damping of any lateral movement of the inner link plate during use.

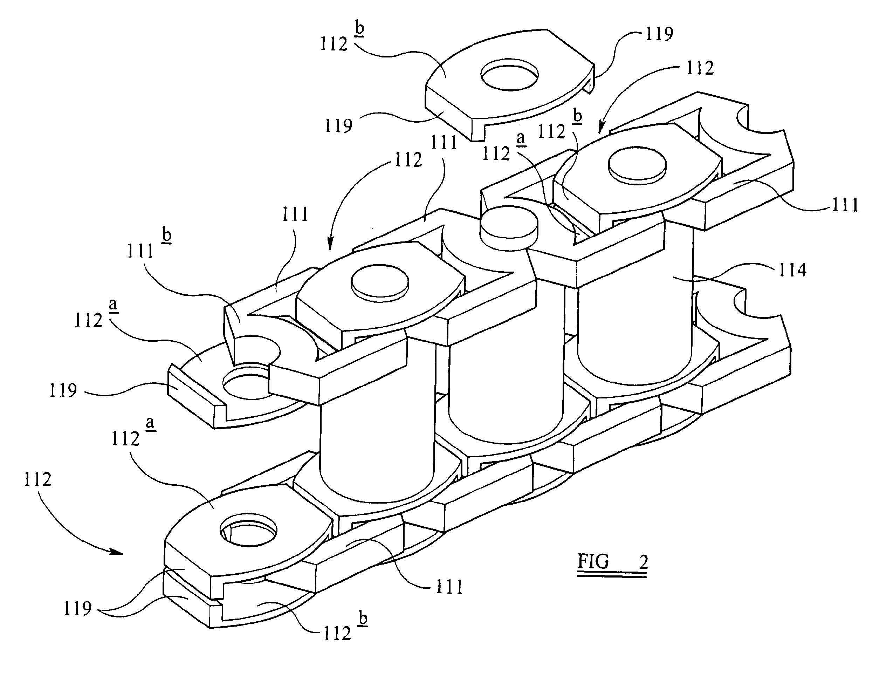

An alternative design is shown in figure 2 in which parts corresponding to those of figure 1 are indicated by the same reference numerals increased by 100 and are not further described except in so far as they differ from their counterparts of figure 1. The only component that differs is the outer link plate 112 which has a two-part construction that serves to enclose the arcuate limbs 111b of the adjacent inner link plates 111. Each part is substantially identical with the outer link 112 of the figure 1 design except that the wall 119 is shallower. A first part 112a is inverted and disposed on the pin 113 between the roller 114 and the inner link plate 111 such that the walls 119 project outwardly into the opening 115 in the inner link plate 11. The second part 112b is disposed in the same manner as the outer link 12 of the figure 1 design such that its walls 119 are in contact with the walls 119 of the first part. The mode of operation is the same as that described in relation to the previous embodiment. The advantage of this design is that sideways bending of the chain is better resisted by the roller 114 and the first part 112a of the outer link 112.

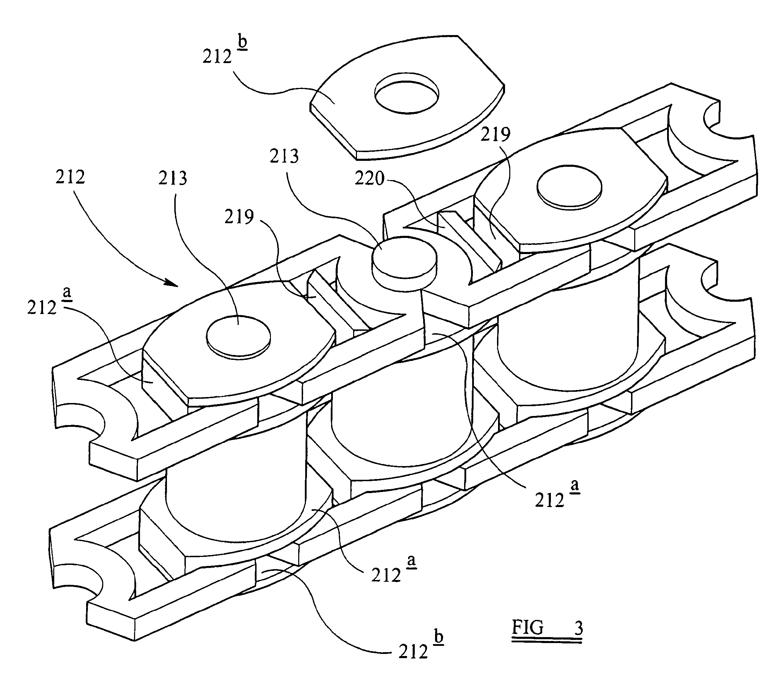

In the embodiment of figure 3 the second part 212b of the outer link plate 212 is simply flat and the wall 219 of the first part 212a is made correspondingly deeper to ensure that there is a bearing surface 220 of adequate depth.

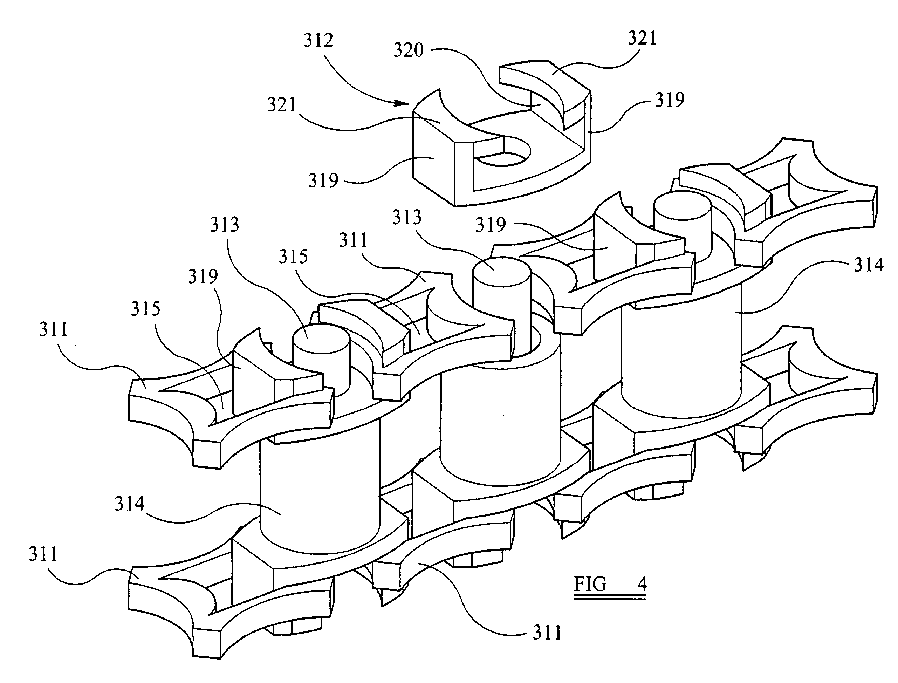

In figure 4, the equivalent link (referenced 312) to the outer link plate of figures 1 to 3 is disposed predominantly in-board of the inner link plate 311. It is mounted on the pin 313 between the roller 314 and the inner link plates 311 and again has end walls 319 that extend through the central opening 315. As in previously described designs, each wall 319 has a bearing surface 320 for contact with that of the inner link plate. However, instead of providing a separate second part to the outer link plate, each wall 319 has an integral perpendicular retaining web 321 that extends over the arcuate limb 311b of the inner link 311 and occupies a plane parallel to the inner link. The retaining webs 321 serve to prevent separation of the inner links from the chain.

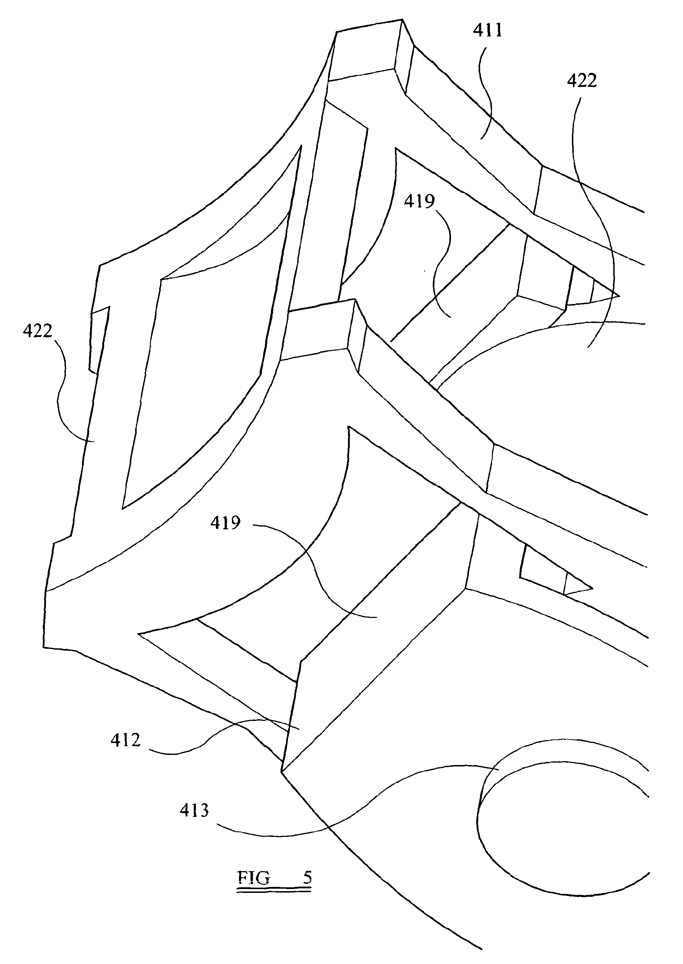

In the embodiment of figure 5 opposed inner link members 411 are connected by an integral cylindrical sector 422 at each end. In this embodiment there is no roller on the pin. The cylindrical sectors 422 of neighbouring inner link members combine to form a replacement for the roller. The connection between the inner and outer link plates 411, 412 is as previously described. In operation, the articulating movement of the inner link plates is such that the cylindrical sectors 422 rotate during meshing with the teeth of a sprocket (not shown in the figures). This serves to cushion the impact and reduces noise.

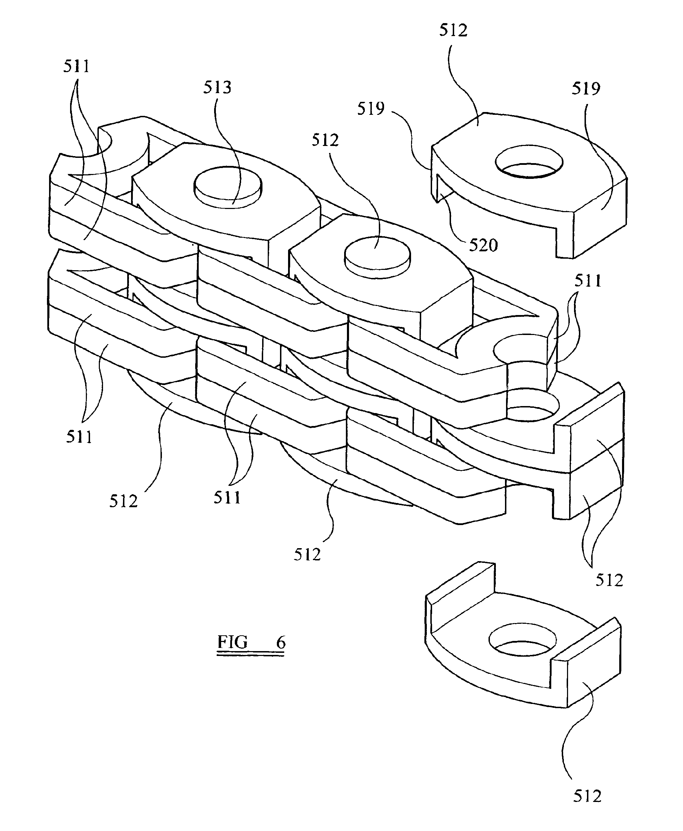

The chain illustrated in figure 6 is a leaf chain of the kind used in the fork carriage lifting mechanism of a forklift truck. The links are arranged into rows of guide link plates 512 interleaved with rows of intermediate link plates 511. The guide link plates take the form of the outer link plate described above with reference to figure 1 and the intermediate link plates take the same form as the inner link plates. In the particular embodiment shown the intermediate link plates 511 that are disposed in a row across the chain are grouped into two pairs and adjacent pairs along the length of the chain are connected on each side by a guide link plate 512 in the same manner as described in the other embodiments. As before, the pin 513 engages with the guide link plates 512 in a friction fit.

It will be appreciated that numerous modifications to the above described design may be made without departing from the scope of the invention as defined in the appended claims. For example, the exact profile of the bearing surface defined on the arcuate limb of the inner or intermediate link plates can take any suitable form. In particular the profile may be asymmetrical so that the amount of articulation of the links when the chain bends in one direction is not the same as that in the other direction. This design can be used in particular in an "anti back bend" chain where full articulation is desirable in one direction for the chain to pass around a sprocket but articulation is prevented in the opposite direction. Furthermore the pin need not be cylindrical as shown in the figures but may take any convenient shape or form.

## Claims

1. A power transmission chain (10) having a longitudinal axis and **characterised in that** it comprises opposed first link members (12) arranged alternately with opposed second link members. (11) along the length of the chain, the first link members interconnecting adjacent second link members in an articulated manner, a clearance defined between adjacent second link members, and a pin (13) disposed in said clearance and extending in a direction transverse to the chain axis, each fist link member being fixed to the pin so that it does not rotate relative thereto, each second link member being free to articulate relative to the pin, the first link member (12) defining a first bearing surface (20) extending in a direction transverse to the direction of the longitudinal axis of the chain and each second link member (11) defining a second bearing surface (16) extending in a direction transverse to that of the longitudinal axis of the chain, at least one of the first or second bearing surfaces (20, 16) being arcuate and the first and second bearing surfaces being in engagement with one another to provide an articulating joint in which there is rolling contact between the bearing surfaces (20, 16) during articulation of the links (11, 12).

2. A power transmission chain according to claim 1, wherein each second link member (11) is disposed between adjacent pins (13).

3. A power transmission chain according to claim 1 or 2, wherein there are two engaging first and second bearing surfaces (20, 16) between adjacent pins (13) so that there are two articulating joints per chain link pitch.

4. A power transmission chain according to claim 1, 2 or 3, wherein the first link member (12) overlaps adjacent second link members (11).

5. A power transmission chain according to any preceding claim, wherein the link members (11, 12) are plate-like.

6. A power transmission chain according to any preceding claim, wherein the first link member (12) is fixed to said pin (13) by means of a friction fit.

7. A power transmission chain according to claim 6, wherein the first link member (12) has an aperture (18) and the periphery of that part of the link member that defines the aperture is a friction fit with the external surface of the pin (13).

8. A power transmission chain according to any preceding claim, wherein there is a roller (14) rotatably disposed on the pin (13).

9. A power transmission chain according to any preceding claim, wherein each first link member (12; 112; 212) has two or more parts (112a, 112b; 212a, 212b).

10. A power transmission chain according to any preceding claim, wherein each first link member (12) comprises a plate having a main portion that extends in a direction along the length of the chain and walls (19) that extend in a direction transverse to chain axis.

11. A power transmission chain according to claim 10, wherein each of the walls (19) defines said first bearing surface (20).

12. A power transmission chain according to claim 11, wherein each first link member (12) has two such walls (19) providing a first bearing surface (20) for the second link members (11) on each side of the first link member along the length of the chain.

13. A power transmission chain according to any one of claims 10 to 12, wherein the first link member (12) extends on the outside of part of the second link member (11).

14. A power transmission chain according to claim 13, wherein the walls (10) extend inwardly towards the axis of the chain (10).

15. A power transmission chain according to any one of claims 10 to 13, wherein the main portion (212a) of the first link member (212) is disposed in-board of the second link member (211) and the walls (219) extend outwardly of the chain axis.

16. A power transmission chain according to claim 15, wherein the walls (319) have retaining portions (321) that prevent separation of the first and second link members (312, 311).

17. A power transmission chain according to claim 16, wherein the retaining portions (321) extend in a plane that is substantially parallel to the plane of the main portion.

18. A power transmission chain according to claim 16 or 17, wherein the retaining portions (321) are integral with the walls (319).

19. A power transmission chain according to claim 9, wherein the first link member (12; 112; 212; 312) comprises two portion.

20. A power transmission chain according to claim 19, wherein a first portion (212a) of the first link member (212) is disposed in-board of the second link members (211) and a second portion (212b) of the first link member extends over the outside of the second link members.

21. A power transmission chain according to claim 20, wherein one or both portions of the first link member (212) have walls (219) that define the first bearing surface (220).

22. A power transmission chain according to claim 21, wherein each first link member (12; 112; 212; 312; 412; 512) has two such walls (19; 119; 219; 319; 419; 519) providing a first bearing surface for the second link members on each side of the first link member (11; 111; 211; 311; 411; 511) along the length of the chain.

23. A power transmission chain according to any one of claims 10 to 18, 21 or 22, wherein there is a clearance between the ends or the walls (19; 119; 219; 319; 419; 519) and the inner link members (11; 111; 211; 311; 411; 511) so as to allow for articulation of the second link members.

24. A power transmission chain according to any preceding claim, wherein the second link member (11; 111; 211; 311; 411; 511) has an opening (15) that receives part of the first link member (12; 112; 212; 312; 412; 512).

25. A power transmission chain according to claim 24, wherein the second bearing surface (16) is defined by part of the second link member (11; 111; 211; 311; 411; 511) that defines the opening (15).

26. A power transmission chain according to any preceding claim, wherein the second bearing surface (16) is arcuate.

27. A power transmission chain according to claim 26, wherein the first bearing surface (20) is planar.

28. A power transmission chain according to any one of claims 1 to 25, wherein the second bearing surface (16) is planar and the first bearing surface (20) is arcuate.

29. A power transmission chain according to any one of claims 1 to 25, wherein the first bearing surface (20) is arcuate.

30. A power transmission chain according to any one of claims 24 to 27, wherein the, or each, arcuate bearing surface (16, 20) is symmetrical.

31. A power transmission chain according to any one of claims 26 to 30, wherein the, or each, arcuate bearing surface (16, 20) is asymmetrical.

32. A power transmission chain according to any preceding claim, wherein ends of second link members (11; 111; 211; 311; 411; 511) have a recess (17) for receipt of the pin (13).

33. A power transmission chain according to claim 32, wherein the recess (17) has a part-circular shape

34. A power transmission chain according to any preceding claim, wherein the chain (10) is a leaf chain with interleaved strands of first and second link members (12, 11).

35. A power transmission chain according to any preceding claim, wherein opposed second link members (11) are connected to one another.

36. A power transmission chain according to claim 35, wherein the opposed second link members (11) are connected by part-cylindrical sections.

37. A power transmission chain according to claim 36, wherein there is such a section at each end of the second link members.

## Patentansprüche

1. Kraftübertragungskette (10) mit einer Längsachse und **dadurch gekennzeichnet, dass** sie aufweist: gegenüberliegende erste Gliedelemente (12), die abwechselnd mit gegenüberliegenden zweiten Gliedelementen (11) entlang der Länge der Kette angeordnet sind, wobei die ersten Gliedelemente benachbarte zweite Gliedelemente in einer gelenkigen Weise verbinden; einen Zwischenraum, der zwischen benachbarten zweiten Gliedelementen definiert wird; und einen Bolzen (13), der im Zwischenraum angeordnet wird und sich in einer Richtung quer zur Kettenachse erstreckt, wobei ein jedes erstes Gliedelement am Bolzen so befestigt ist, dass es sich nicht relativ dazu dreht, wobei jedes zweite Gliedelement frei ist, um relativ zum Bolzen gelenkig zu sein, wobei das erste Gliedelement (12) eine erste Lagerfläche (20) definiert, die sich in einer Richtung quer zur Richtung der Längsachse der Kette erstreckt, und wobei jedes zweite Gliedelement (11) eine zweite Lagerfläche (16) definiert, die sich in einer Richtung quer zu der der Längsachse der Kette erstreckt, wobei mindestens eine der ersten oder zweiten Lagerfläche (20, 16) bogenförmig ist, und wobei die erste und zweite Lagerfläche miteinander in Eingriff sind, um eine Gelenkverbindung bereitzustellen, bei der ein Wälzkontakt zwischen den Lagerflächen (20, 16) während der gelenkigen Verbindung der Glieder (11, 12) zu verzeichnen ist.

2. Kraftübertragungskette nach Anspruch 1, bei der jedes zweite Gliedelement (11) zwischen benachbarten Bolzen (13) angeordnet ist.

3. Kraftübertragungskette nach Anspruch 1 oder 2, bei der zwei in Eingriff kommende erste und zweite Lagerflächen (20, 16) zwischen benachbarten Bolzen (13) vorhanden sind, so dass zwei Gelenkverbindungen pro Kettengliedabstand vorhanden sind.

4. Kraftübertragungskette nach Anspruch 1, 2 oder 3, bei der das erste Gliedelement (12) benachbarte zweite Gliedelemente (11) überdeckt.

5. Kraftübertragungskette nach einem der vorhergehenden Ansprüche, bei der die Gliedelemente (11, 12) plattenartig sind.

6. Kraftübertragungskette nach einem der vorhergehenden Ansprüche, bei der das erste Gliedelement (12) am Bolzen (13) mittels einer Reibungspassung befestigt ist.

7. Kraftübertragungskette nach Anspruch 6, bei der das erste Gliedelement (12) eine Öffnung (18) aufweist, und der Umfang jenes Teils des Gliedelementes, der die Öffnung definiert, eine Reibungspassung mit der Außenfläche des Bolzens (13) aufweist.

8. Kraftübertragungskette nach einem der vorhergehenden Ansprüche, bei der eine Rolle (14) drehbar auf dem Bolzen (13) angeordnet ist.

9. Kraftübertragungskette nach einem der vorhergehenden Ansprüche, bei der ein jedes erstes Gliedelement (12; 112; 212) zwei oder mehr Teile (112a, 112b; 212a, 212b) aufweist.

10. Kraftübertragungskette nach einem der vorhergehenden Ansprüche, bei der ein jedes erstes Gliedelement (12) eine Platte mit einem Hauptabschnitt, der sich in einer Richtung entlang der Länge der Kette erstreckt, und Wände (19) aufweist, die sich in einer Richtung quer zur Kettenachse erstrecken.

11. Kraftübertragungskette nach Anspruch 10, bei der eine jede der Wände (19) eine erste Lagerfläche (20) definiert.

12. Kraftübertragungskette nach Anspruch 11, bei der ein jedes erstes Gliedelement (12) zwei derartige Wände (19) aufweist, die eine erste Lagerfläche (20) für die zweiten Gliedelemente (11) auf jeder Seite des ersten Gliedelementes entlang der Länge der Kette bereitstellen.

13. Kraftübertragungskette nach einem der Ansprüche 10 bis 12, bei der sich das erste Gliedelement (12) auf der Außenseite des Teils des zweiten Gliedelementes (11) erstreckt.

14. Kraftübertragungskette nach Anspruch 13, bei der sich die Wände (10) nach innen in Richtung der Achse der Kette (10) erstrecken.

15. Kraftübertragungskette nach einem der Ansprüche 10 bis 13, bei der der Hauptabschnitt (212a) des ersten Gliedelementes (212) innenliegend vom zweiten Gliedelement (211) angeordnet ist und sich die Wände (219) nach außen von der Kettenachse erstrecken.

16. Kraftübertragungskette nach Anspruch 15, bei der die Wände (319) Halteabschnitte (321) aufweisen, die eine Trennung der ersten und zweiten Gliedelemente (312, 311) verhindern.

17. Kraftübertragunsskette nach Anspruch 16, bei der sich die Halteabschnitte (321) in einer Ebene erstrecken, die im Wesentlichen parallel zur Ebene des Hauptabschnittes verläuft.

18. Kraftübertragungskette nach Anspruch 16 oder 17, bei der die Halteabschnitte (321) mit den Wänden (319) zusammenhängend sind.

19. Kraftübertragungskette nach Anspruch 9, bei der das erste Gliedelement (12; 112; 212; 312) zwei Abschnitte aufweist.

20. Kraftübertragungskette nach Anspruch 19, bei der ein erster Abschnitt (212a) des ersten Gliedelementes (212) innenliegend von den zweiten Gliedelementen (211) angeordnet ist und sich ein zweiter Abschnitt (212b) des ersten Gliedelementes über die Außenseite der zweiten Gliedelemente erstreckt.

21. Kraftübertragungskette nach Anspruch 20, bei der einer oder beide Abschnitt des ersten Gliedelementes (212) Wände (219) aufweisen, die die erste Lagerfläche (220) definieren.

22. Kraftübertragungskette nach Anspruch 21, bei der jedes erste Gliedelement (12; 112; 212; 312; 412; 512) zwei derartige Wände (19; 119; 219; 319; 419; 519) aufweist, die eine erste Lagerfläche für die zweiten Gliedelemente auf jeder Seite des ersten Gliedelementes (11; 111; 211; 311; 411; 511) entlang der Länge der Kette bereitstellen.

23. Kraftübertragungskette nach einem der Ansprüche 10 bis 18, 21 oder 22, bei der ein Zwischenraum zwischen den Enden der Wände (19; 119; 219; 319; 419; 519) und den inneren Gliedelementen (11; 111; 211; 311; 411; 511) vorhanden ist, um so eine gelenkige Verbindung der zweiten Gliedelemente zu gestatten.

24. Kraftübertragungskette nach einem der vorhergehenden Ansprüche, bei der das zweite Gliedelement (11; 111; 211; 311; 411; 511) eine Öffnung (15) aufweist, die einen Teil des ersten Gliedelementes (12; 112; 212; 312; 412; 512) aufnimmt.

25. Kraftübertragungskette nach Anspruch 24, bei der die zweite Lagerfläche (16) durch einen Teil des zweiten Gliedelementes (11; 111; 211; 311; 411; 511) definiert wird, der die Öffnung (15) definiert.

26. Kraftübertragungskette nach einem der vorhergehenden Ansprüche, bei der die zweite Lagerfläche (16) bogenförmig ist.

27. Kraftübertragungskette nach Anspruch 26, bei der die erste Lagerfläche (20) eben ist.

28. Kraftübertragungskette nach einem der Ansprüche 1 bis 25, bei der die zweite Lagerfläche (16) eben und die erste Lagerfläche (20) bogenförmig ist.

29. Kraftübertragungskette nach einem der Ansprüche 1 bis 25, bei der die erste Lagerfläche (20) bogenförmig ist.

30. Kraftübertragungskette nach einem der Ansprüche 24 bis 27, bei der die oder jede bogenförmige Lagerfläche (16, 20) symmetrisch ist.

31. Kraftübertragungskette nach einem der Ansprüche 26 bis 30, bei der die oder jede bogenförmige Lagerfläche (16, 20) asymmetrisch ist.

32. Kraftübertragungskette nach einem der vorhergehenden Ansprüche, bei der die Enden der zweiten Gliedelemente (11; 111; 211; 311; 411; 511) eine Aussparung (17) für die Aufnahme des Bolzens (13) aufweise.

33. Kraftübertragungskette nach Anspruch 32, bei der die Aussparung (17) eine teilkreisförmige Form aufweist.

34. Kraftübertragungskette nach einem der vorhergehenden Ansprüche, bei der die Kette (10) eine Flyerkette mit ineinandergeschachtelten Strängen von ersten und zweiten Gliedelementen (12, 11) ist.

35. Kraftübertragungskette nach einem der vorhergehenden Ansprüche, bei der gegenüberliegende zweite Gliedelemente (11) miteinander verbunden sind.

36. Kraftübertragungskette nach Anspruch 35, bei der die gegentiberliegenden zweiten Gliedelemente (11) durch teilzylindrische Abschnitte verbunden sind.

37. Kraftübertragungskette nach Anspruch 36, bei der ein derartiger Abschnitt an jedem Ende der zweiten Gliedelemente vorhanden ist.

## Revendications

1. Chaîne de transmission de puissance (10), comportant un axe longitudinal et **caractérisée en ce qu'**elle comprend des premiers éléments de maillon opposés (12) agencés en alternance avec des deuxièmes éléments de maillon opposés (11) le long de la longueur de la chaîne, les premiers éléments de maillon interconnectant les deuxièmes éléments de maillon adjacents de manière articulée, un espace étant défini entre les deuxièmes éléments de maillon adjacents, et une broche (13) agencée dans ledit espace et s'étendant dans une direction transversale à l'axe de la chaîne, chaque premier élément de maillon étant fixé sur la broche de sorte à ne pas tourner par rapport à celle-ci, chaque deuxième éléments de maillon pouvant être articulé librement par rapport à la broche, le premier élément de maillon (12) définissant une première surface de support (20) s'étendant dans une direction transversale à la direction de l'axe longitudinal de la chaîne, et chaque deuxième élément de maillon (11) définissant une deuxième surface de support (16) s'étendant dans une direction transversale à celle de l'axe longitudinal de la chaîne, au moins une des première et deuxième surfaces de support (20, 16) étant arquée et les première et deuxième surfaces de support étant engagées l'une dans l'autre pour établir une liaison articulée, un contact par roulement étant établi entre les surfaces de support (20, 16) au cours de l'articulation des maillons (11, 12).

2. Chaîne de transmission de puissance selon la revendication 1, dans laquelle chaque deuxième élément de maillon (11) est agencé entre deux broches adjacentes (13).

3. Chaîne de transmission de puissance selon les revendications 1 ou 2, dans laquelle deux première et deuxième surfaces de support à engagement (20, 16) sont agencées entre les broches adjacentes (13), de sorte à établir deux liaisons articulées pour chaque pas de maillon de chaîne.

4. Chaîne de transmission de puissance selon les revendications 1, 2 ou 3, dans laquelle le premier élément de maillon (12) chevauche les deuxièmes éléments de maillon adjacents (11).

5. Chaîne de transmission de puissance selon l'une quelconque des revendications précédentes, dans laquelle les éléments de maillon (11, 12) ont une forme en plaque.

6. Chaîne de transmission de puissance selon l'une quelconque des revendications précédentes, dans laquelle le premier élément de maillon (12) est fixé sur ladite broche (13) par l'intermédiaire d'un ajustement serré.

7. Chaîne de transmission de puissance selon la revendication 6, dans laquelle le premier élément de maillon (12) comporte une ouverture (18), la périphérie de la partie de l'élément de maillon définissant l'ouverture étant ajustée par serrage sur la surface externe de la broche (13).

8. Chaîne de transmission de puissance selon l'une quelconque des revendications précédentes, dans laquelle un rouleau (14) est agencé de manière rotative sur la broche (13).

9. Chaîne de transmission de puissance selon l'une quelconque des revendications précédentes, dans laquelle chaque premier élément de maillon (12; 112; 212) comporte deux ou plusieurs parties (112a, 112b ; 212a. 212b).

10. Chaîne de transmission de puissance selon l'une quelconque des revendications précédentes, dans laquelle chaque premier élément de maillon (12) comprend une plaque comportant une partie principale s'étendant dans une direction le long de la chaîne, et des parois (19) s'étendant dans une direction transversale à l'axe de la chaîne.

11. Chaîne de transmission de puissance selon la revendication 10, dans laquelle chacune des parois (19) définit ladite première surface de support (20).

12. Chaîne de transmission de puissance selon la revendication 11, dans laquelle chaque premier élément de maillon (12) comporte deux parois de ce type (19), établissant une première surface de support (20) pour les deuxièmes éléments de maillon (11) sur chaque côté du premier élément de maillon, long de la longueur de la chaîne.

13. Chaîne de transmission de puissance selon l'une quelconque des revendications 10 à 12, dans laquelle le premier élément de maillon (12) s'étend sur l'extérieur d'une partie du deuxième élément de maillon (11).

14. Chaîne de transmission de puissance selon la revendication 13, dans laquelle les parois (10) s'étendent vers l'intérieur, en direction de l'axe de la chaîne (10).

15. Chaîne de transmission de puissance selon l'une quelconque des revendications 10 à 13, dans laquelle la partie principale (212a) du premier élément de maillon (212) est agencée à l'intérieur du deuxième élément de maillon (211), les parois (219) s'étendant vers l'extérieur de l'axe de la chaîne.

16. Chaîne de transmission de puissance selon la revendication 15, dans laquelle les parois (319) comportent des parties de retenue (321) empêchant une séparation des premier et deuxième éléments de maillon (312, 311).

17. Chaîne de transmission de puissance selon la revendication 16, dans laquelle les parties de retenue (321) s'étendent dans un plan pratiquement parallèle au plan de la partie principale.

18. Chaîne de transmission de puissance selon les revendications 16 ou 17, dans laquelle les parties de retenue (321) font partie intégrante des parois (319).

19. Chaîne de transmission de puissance selon la revendication 9, dans laquelle le premier élément de maillon (12; 112 ; 212 ; 312) comprend deux parties.

20. Chaîne de transmission de puissance selon la revendication 19, dans laquelle une première partie (212a) du premiers élément de maillon (212) est agencée à l'intérieur du deuxième élément de maillon (211), une deuxième partie (212b) du premier élément de maillon s'étendant au-dessus de l'extérieur des deuxièmes éléments de maillon.

21. Chaîne de transmission de puissance selon la revendication 20, dans laquelle une partie ou les deux parties du premier élément de maillon (212) comportent des parois (219) définissant la première surface de support (220).

22. Chaîne de transmission de puissance selon la revendication 21, dans laquelle chaque premier élément de maillon (12 ; 112 ; 212 ; 312 ; 412 ; 512) comporte deux parois de ce type (19; 119 ; 219 ; 319 ; 419 ; 519) établissant une première surface de support pour les deuxièmes éléments de maillon sur chaque côté du premier élément de maillon (11 ; 111 ; 211 ; 311 ; 411 ; 511), le long de la longueur de la chaîne.

23. Chaîne de transmission de puissance selon l'une quelconque des revendications 10 à 18, 21 ou 22, dans laquelle un espace est établi entre les extrémités des parois (19 ; 119 ; 219 ; 319 ; 419 ; 519) et les éléments de maillon internes (11 ; 111 ; 211 ; 311 ; 411 ; 511), de sorte à permettre l'articulation des deuxièmes éléments de maillon.

24. Chaîne de transmission de puissance selon l'une quelconque des revendications précédentes, dans laquelle le deuxième élément de maillon (11 ; 111 ; 211 ; 311; 411 ; 511) comporte une ouverture (15) recevant une partie du premier élément de maillon (12 ; 112 ; 212 ; 312 ; 412 ; 512).

25. Chaîne de transmission de puissance selon la revendication 24, dans laquelle la deuxième surface de support (16) est définie par une partie du deuxième élément de maillon (11; 111 ; 211 ; 311 ; 411 ; 511) définissant l'ouverture (15).

26. Chaîne de transmission de puissance selon l'une quelconque des revendications précédentes, dans laquelle la deuxième surface de support (16) est arquée.

27. Chaîne de transmission de puissance selon la revendication 26, dans laquelle la première surface de support (20) est plane.

28. Chaîne de transmission de puissance selon l'une quelconque des revendications 1 à 25, dans laquelle la deuxième surface de support (16) est plane, la première surface de support. (20) étant arquée.

29. Chaîne de transmission de puissance selon l'une quelconque des revendications 1 à 25, dans laquelle la première surface de support (20) est arquée.

30. Chaîne de transmission de puissance selon l'une quelconque des revendications 24 à 27, dans laquelle la ou chaque surface de support arquée (16, 20) est symétrique.

31. Chaîne de transmission de puissance selon l'une quelconque des revendications 26 à 30, dans laquelle la ou chaque surface de support arquée (16, 20) est asymétrique.

32. Chaîne de transmission de puissance selon l'une quelconque des revendications précédentes, dans laquelle les extrémités des deuxièmes éléments de maillon (11 ; 111 ; 211 ; 311 ; 411 ; 511) comportent un évidement (17) pour recevoir la broche (13).

33. Chaîne de transmission de puissance selon la revendication 32, dans laquelle l'évidement (17) a une forme partiellement circulaire.

34. Chaîne de transmission de puissance selon l'une quelconque des revendications précédentes, dans laquelle la chaîne (10) est constituée par une chaîne à maillons jointifs avec des torons entrelacés des premiers et deuxièmes éléments de maillon (12, 11).

35. Chaîne de transmission de puissance selon l'une quelconque des revendications précédentes, dans laquelle les deuxièmes éléments de maillon opposés (11) sont connectés les uns aux autres.

36. Chaîne de transmission de puissance selon la revendication 35, dans laquelle les deuxièmes éléments de maillon opposés (11) sont connectés par des sections partiellement cylindriques.

37. Chaîne de transmission de puissance selon la revendication 36, dans laquelle une section de ce type est agencée au niveau de chaque extrémité des deuxièmes éléments de maillon.
